# EUROPEAN PATENT APPLICATION

(11) **EP 4 809 891 A1**
(43) Date of publication of application: **23.09.2026**
(21) Application number: 25890396.2
(22) Date of filing: 14.11.2025
(51) Int. Cl.: A47L 11/40

(54) **ROBOTIC ARM AND CLEANING ROBOT**

(30) Priority: 03.01.2025 CN 202520030073 U
(71) Applicant: Dreame Innovation Technology (Suzhou) Co., Ltd., Suzhou, Jiangsu 215000 (CN)
(72) Inventor: HAN, Chi, Suzhou, Jiangsu 251000 (CN); ZHANG, Heng, Suzhou, Jiangsu 251000 (CN); CHEN, Jingwen, Suzhou, Jiangsu 251000 (CN); LIU, Yinghao, Suzhou, Jiangsu 251000 (CN)
(74) Representative: Ström & Gulliksson AB
(86) International application number: PCT/CN2025/135149
(87) International publication number: WO 2026/144594

(57) **Abstract**

The present application relates to the field of cleaning devices, and discloses a robotic arm and a cleaning robot. The robotic arm includes a robotic arm body and a robotic gripper. The robotic arm body is capable of at least driving the robotic gripper to rotate in a horizontal direction and to swing in a vertical direction, the robotic gripper includes a base, and a driving mechanism and two jaws that are disposed on the base, the driving mechanism is capable of driving the two jaws to move toward or away from each other, and the jaws are configured to grip an object to be cleaned or to assemble a cleaning element. The cleaning robot includes a body and the robotic arm. The robotic arm of the present application can be mounted on the cleaning robot. The robotic arm body driving the robotic gripper to rotate in the horizontal direction and to swing in the vertical direction enables a range of movement of the robotic gripper to be expanded, such that the robotic arm can be positioned at a desired location, and the robotic gripper can grip the object to be cleaned. Moreover, the robotic gripper can be equipped with the cleaning element such as a brush and a sponge brush to clean wall surfaces, narrow gaps, low-clearance areas, spaces behind doors and the like, thereby expanding an application range of the cleaning robot.

## Description

### Cross-Reference to Related Applications

The present application claims the benefit of Chinese Patent Application No. 202520030073.9, filed on January 3, 2025, the content of which is incorporated herein by reference.

### Technical Field

The present application relates to the field of cleaning devices, and in particular, to a robotic arm and a cleaning robot.

### Background

A cleaning robot is an intelligent household appliance that can automatically perform floor cleaning operations within a room by virtue of a certain level of artificial intelligence. Generally, the cleaning robot uses a combination of brushing and vacuuming to suction debris from the floor into its built-in dust box, thereby completing floor cleaning.

With economic development, sweeping robots have become common in many households. Although the existing sweeping robots can navigate autonomously and avoid obstacles, their functionality is limited to spacious and flat floors. They are mainly used for cleaning open and flat floors, and are generally unlikely to enter narrow gaps or low-clearance areas, and also have difficulty accessing hard-to-reach areas such as wall surfaces and areas beneath household appliances. As a result, their functionality is limited, they are only suitable for specific types of cleaning tasks, presenting certain limitations in use.

### Summary

In order to solve the above technical problems or at least partially solve the above technical problems, the present application provides a robotic arm and a cleaning robot.

The present application provides a robotic arm for use in a cleaning robot. The robotic arm includes a robotic arm body and a robotic gripper disposed on the robotic arm body, where the robotic arm body can at least drive the robotic gripper to rotate in a horizontal direction and to swing in a vertical direction, the robotic gripper includes a base, and a driving mechanism and two jaws that are disposed on the base, the driving mechanism can drive the two jaws to move toward or away from each other, and the jaws are configured to grip an object to be cleaned or to assemble a cleaning element.

Optionally, the driving mechanism includes a first driving member and two transmission members, and the first driving member can drive the two jaws to move via the two transmission members, respectively.

Optionally, a worm is provided at an output end of the first driving member, each of the transmission members includes a transmission gear set and a linkage structure, a leading gear of the transmission gear set can mesh with the worm, and a trailing gear of the transmission gear set is connected to a jaw via the linkage structure.

Optionally, the linkage structure includes a first link and a second link;
one end of the first link is connected to the trailing gear of the transmission gear set, and the other end of the first link is articulated to the jaw; and
one end of the second link is articulated to the base, and the second end of the second link is articulated to the jaw.

Optionally, the robotic arm includes a second driving member and a rotary base that are configured to be disposed on a body of the cleaning robot, where the second driving member can drive the rotary base to rotate, and the robotic arm body is disposed on the rotary base.

Optionally, the robotic arm body includes a first arm, a second arm and a third arm that are sequentially connected, the first arm being disposed on the rotary base, and the robotic gripper being disposed on the third arm;
where the first arm can swing in the vertical direction relative to the rotary base, the second arm can swing in the vertical direction relative to the first arm, and the third arm can swing in the vertical direction relative to the second arm.

Optionally, a third driving member for driving the first arm to swing in the vertical direction relative to the rotary base is provided inside the first arm;
and/or a fourth driving member for driving the second arm to swing in the vertical direction relative to the first arm is provided inside the first arm;
and/or a fifth driving member for driving the third arm to swing in the vertical direction relative to the second arm is provided inside the second arm.

Optionally, the second arm is located on a side of the first arm, and the third arm is located at an end of the second arm.

The present application further provides a cleaning robot, including a body and a robotic arm described above, the robotic arm being disposed on the body.

Optionally, a cover assembly is provided on the body, where the cover assembly is configured to be opened when the robotic arm is in an operating state and to cover a periphery of the robotic arm when the robotic arm is in a non-operating state.

Optionally, the cover assembly includes a first cover and a second cover disposed opposite each other, a first flipping member and a second flipping member is provided on the body, the first flipping member can drive the first cover to flip, the second flipping member can drive the second cover to flip, and the flipped second cover can be stacked on the first cover.

Optionally, the first flipping member includes a first flipping driving member and a first flipping linkage including a first driving rod and a first supporting rod, where one end of the first driving rod is connected to an output end of the first flipping driving member, the other end of the first driving rod is articulated to an end of the first supporting rod, and an end of the first supporting rod away from the first driving rod is articulated to the first cover.

Optionally, the second flipping member includes a second flipping driving member and a second flipping linkage including a second driving rod and a second supporting rod, an end of the second driving rod is bent, the bent end of the second driving rod is connected to an output end of the second flipping driving member, the other end of the second driving rod is articulated to the second cover, one end of the second supporting rod is articulated to the body, and the other end of the second supporting rod is articulated to the second cover.

The technical solutions provided by the embodiments of the present application have the following advantages over the prior art.

The robotic arm of the present application can be mounted on the cleaning robot. The robotic arm body driving the robotic gripper to rotate in the horizontal direction and to swing in the vertical direction enables a range of movement of the robotic gripper to be expanded, such that the robotic arm can be positioned at a desired location, and the robotic gripper can grip the object to be cleaned. Moreover, the robotic gripper can be equipped with the cleaning element such as a brush and a sponge brush to clean wall surfaces, narrow gaps, low-clearance areas, spaces behind doors and the like, thereby expanding an application range of the cleaning robot.

### Brief Description of the Drawings

The drawings herein, which are incorporated into the specification and form a part of the specification, illustrate embodiments that conform to the present application and are used together with the specification to explain the principles of the present application.

In order to illustrate the technical solutions in the embodiments of the present application or in the prior art more clearly, the accompanying drawings to be used in the description of the embodiments or the prior art will be briefly introduced below; obviously, those of ordinary skill in the art may still derive other drawings from these accompanying drawings without involving any creative effort.
FIG. 1 is a schematic structural diagram of a robotic arm disposed on a cleaning robot according to an embodiment of the present application;
FIG. 2 is a schematic structural diagram of a robotic gripper according to an embodiment of the present application;
FIG. 3 is a schematic structural diagram of a robotic arm in a retracted state according to an embodiment of the present application;
FIG. 4 is a schematic structural diagram of a cleaning robot according to an embodiment of the present application;
FIG. 5 is a schematic structural diagram of a cover assembly in an open state according to an embodiment of the present application;
FIG. 6 is a cross-sectional view of the cover assembly in a closed state according to an embodiment of the present application; and
FIG. 7 is a cross-sectional view of the cover assembly in the open state according to an embodiment of the present application.

### Detailed Description of Embodiments

To provide a clearer understanding of the aforementioned objectives, features, and advantages of the present application, the solutions of the present application will be described in further detail below. It should be noted that in the case of no conflict, the embodiments in the present application and the features in the embodiments can be combined with each other.

The following description includes many specific details to facilitate a full understanding of the present application; however, the present application may also be implemented in other ways not described herein. Obviously, the embodiments in the specification are only some rather than all of the embodiments of the present application.

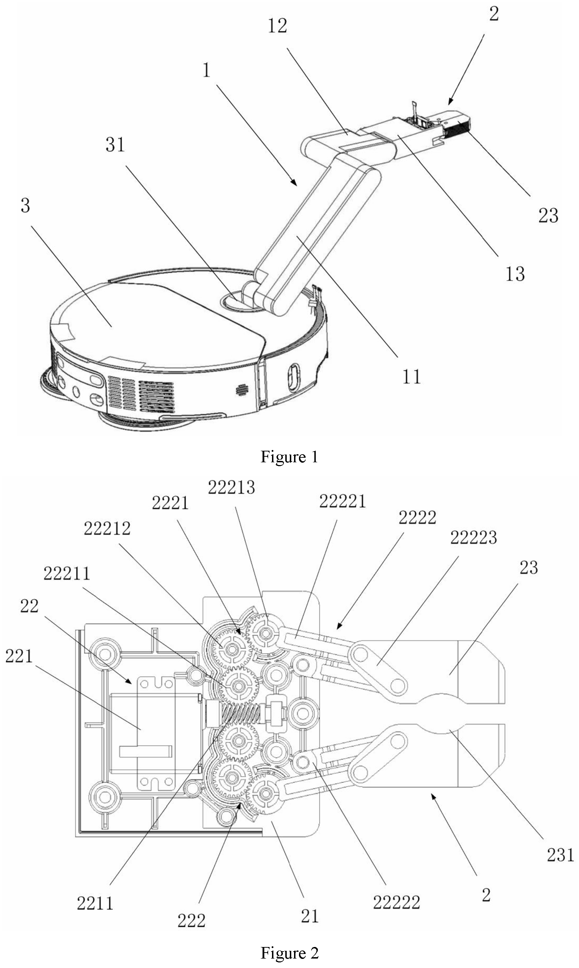

As shown in FIG. 1, a robotic arm according to an embodiment of the present application is applied to a cleaning robot. The cleaning robot includes a robotic arm body 1 and a robotic gripper 2 disposed on the robotic arm body 1. The robotic arm body 1 may be mounted on a body 3 of the cleaning robot. It should be understood that the robotic arm body 1 may also be mounted on other devices according to requirements, without limitation. The robotic gripper 2 is disposed at an end of the robotic arm body 1, such that the robotic gripper 2 can be driven to move by the robotic arm body 1.

The robotic arm body 1 can at least drive the robotic gripper 2 to rotate in a horizontal direction and to swing in a vertical direction. That is, the specific configuration of the robotic arm body 1 is not limited, as long as it can drive the robotic gripper 2 to rotate in the horizontal direction and to swing in the vertical direction. The robotic gripper 2 includes a base 21, and a driving mechanism 22 and two jaws 23 that are disposed on the base 21. The base 21 is disposed on the robotic arm body 1, the two jaws 23 are disposed opposite each other on the base 21, and the jaws 23 extend from an end of the base 21, thereby facilitating gripping and cleaning operations. The driving mechanism 22 can drive the two jaws 23 to move toward or away from each other, and the jaws 23 can be configured to grip an object to be cleaned or to assemble a cleaning element. When the driving mechanism 22 drives the two jaws 23 to move toward each other, the two jaws 23 can grip the object to be cleaned such as garbage, and when the driving mechanism 22 drives the two jaws 23 to move away from each other, the two jaws 23 can release the object to be cleaned such as garbage, so as to perform operations such as object picking and garbage disposal. In addition, after the two jaws 23 are moved away from each other, the cleaning element such as a brush and a sponge brush can be assembled to cooperate with the robotic arm body 1 to perform a cleaning operation.

The robotic arm of the present application can be mounted on the cleaning robot. The robotic arm body 1 driving the robotic gripper 2 to rotate in the horizontal direction and to swing in the vertical direction enables a range of movement of the robotic gripper 2 to be expanded, such that the robotic arm can be positioned at a desired location, and the robotic gripper 2 can grip or clamp the object to be cleaned. Moreover, the robotic gripper can be equipped with the cleaning element such as a brush and a sponge brush to clean wall surfaces, narrow gaps, low-clearance areas, spaces behind doors and the like, thereby expanding an application range of the cleaning robot.

In some embodiments, as shown in FIG. 2, the driving mechanism 22 includes a first driving member 221 and two transmission members 222. Both the first driving member 221 and the two transmission member 222 are disposed on the base 21. The first driving member 221 can drive the two jaws 23 to move via the two transmission members 222, respectively, so as to drive the two jaws 23 to move toward or away from each other. Moreover, the two jaws 23 can be supported outside the base 21 by the transmission members 222.

With such a design, the two jaws 23 can be driven to move toward or away from each other by means of the first driving member 221 and two transmission members 222, thereby reducing the cost of driving components; and the two jaws 23 can be moved synchronously, which facilitates the positioning of the two jaws 23.

It should be understood that in some other embodiments, the driving mechanism 22 includes two driving components which respectively drive the two jaws 23 to move or respectively drive the two jaws 23 to move via two transmission components, such that the two jaws 23 can move toward or away from each other, without limitation.

In some embodiments, with continued reference to FIG. 2, a worm 2211 is provided at an output end of the first driving member 221, such that the worm 2211 can be driven to rotate by the first driving member 221. Each of the transmission members 222 includes a transmission gear set 2221 and a linkage structure 2222. The transmission gear set 2221 includes a plurality of gears meshing sequentially. A leading gear of the transmission gear set 2221 can mesh with the worm 2211, and a trailing gear of the transmission gear set 2221 is connected to a jaw 23 via the linkage structure 2222, such that the trailing gear of the transmission gear set 2221 drives the jaw 23 to move via the linkage structure 2222, enabling the two jaws 23 to move toward or away from each other.

The plurality of gears of the transmission gear set 2221 may all be helical gears. The leading gear of the transmission gear set 2221 serves as a worm wheel and meshes with the worm 2211, such that the worm wheel can be driven to rotate by the worm 2211, thereby transmitting power via the transmission gear set 2221. Alternatively, the plurality of gears of the transmission gear set 2221 may all be spur gears. A worm wheel is coaxially connected to the leading gear of the transmission gear set 2221, and the worm wheel can rotate synchronously with the leading gear of the transmission gear set 2221, such that rotation of the worm wheel can drive the transmission gear set 2221 to rotate.

With such a design, cooperation between the worm and the worm wheel 2211 enables a driving direction of the first driving member 221 to be changed, facilitating the arrangement of the first driving member 221, and reducing the space occupation in the vertical direction. Moreover, the provision of the transmission gear set can change a transmission path, facilitating the design of position of the first driving member 221. That is, the design of the worm wheel and the worm 2211 and the transmission gear set enables a more compact structure of the robotic gripper 2. The first driving member 221 includes a driving motor or a combination of a driving motor and a speed reducer, which may be selected according to actual requirements.

In some embodiments, with continued reference to FIG. 2, the linkage structure 2222 includes a first link 22221 and a second link 22222; one end of the first link 22221 is connected to the trailing gear of the transmission gear set 2221, and the other end of the first link 22221 is articulated to the jaw 23; and one end of the second link 22222 is articulated to the base 21, and the second end of the second link 22222 is articulated to the jaw 23. The second link 22222 is disposed inside of the first link 22221, and the first link 22221 and the second link 22222 extend parallel to each other. It should be understood that a certain included angle may also be formed between the first link 22221 and the second link 22222.

With such a design, the second link 22222 can function to support the jaw 23, and the first link 22221 can rotate as the trailing gear of the transmission gear set 2221 rotates, so as to drive the jaw 23 to rotate, thereby enabling the two jaws 23 to move toward or away from each other, facilitating the driving operation and ensuring a supporting effect for the jaws 23. Moreover, the design of the robotic gripper 2 allows the jaws 23 to open outwardly and close inwardly in the horizontal direction. This design not only enhances stability and precision during gripping, but also provides increased flexibility, enabling the jaws 23 to adapt to objects of various shapes and sizes.

In some embodiments, the linkage structure 2222 further includes a third link 22223. The third link 22223 is disposed on the jaw 23, and an end of the first link 22221 and an end of the second link 22222 are articulated to two ends of the third link 22223, respectively, thereby improving the ease of connection.

In some embodiments, with continued reference to FIG. 2, the transmission gear set 2221 includes a first gear 22211, a second gear 22212, and a third gear 22213 meshing sequentially. The first gear 22211, the second gear 22212, and the third gear 22213 are all helical gears, the first gear 22211 serves as a worm wheel and meshes with the worm 2211, the second gear 22212 meshes with the first gear 22211, the third gear 22213 meshes with the second gear 22212, and the first link 22221 is disposed on the third gear 22213. The arrangement positions of the first gear 22211, the second gear 22212 and the third gear 22213 are not limited, and may be designed according to actual requirements.

It should be understood that the transmission gear set 2221 of the present application may include a different number of gears, as long as the transmission requirements are satisfied.

In some embodiments, an arc-shaped groove 231 is provided on either of corresponding side surfaces of the two jaws 23. The two arc-shaped grooves 231 on the two jaws 23 are disposed opposite each other, and are configured to grip the object to be cleaned such as garbage, for example, a small-sized flexible object and a rigid object having a regular shape. The gripping of the object to be cleaned such as garbage may be implemented by locating, based on sensors and intelligent algorithms, the object to be cleaned such as garbage, and placing it in a desired area. Such sensing, feedback and locating methods are conventional in the art, are not described in detail here, and do not form part of the subject matter of the present application.

In some embodiments, an inclined surface is provided on an inner side of an end of each of the two jaws 23 that is close to the base 21, so as to avoid interference with movement of the jaws 23 and prevent scraping or collision between the jaws 23 and the base 21.

In some embodiments, the jaws 23 each are of a strip-shaped structure, where a sloped surface is provided on an outer side of an end of the jaw 23, so as to facilitate assembling of the cleaning element such as a brush and a sponge brush.

In addition, with such a configuration, automatic replacement can be realized. That is, the cleaning element such as a brush and a sponge brush is placed horizontally in a replacement area; when replacement is required, the cleaning robot moves to the replacement area, and the jaws 23 are oriented horizontally by means of the robotic arm body 1; and the cleaning robot then moves such that the jaws 23 are inserted into the cleaning element such as a brush and a sponge brush, thereby achieving automatic assembly of the cleaning element. Alternatively, the jaws 23 are inserted into a placement position to reset the cleaning element such as a brush and a sponge brush, thereby realizing automatic replacement. Such an automatic replacement method is conventional, is not described in detail here, and does not form part of the subject matter of the present application.

In some embodiments, as shown in FIG. 1, the robotic arm includes a second driving member and a rotary base 31 that are configured to be disposed on a body 3 of the cleaning robot. The second driving member can drive the rotary base 31 to rotate, and the robotic arm body 1 is disposed on the rotary base 31.

With such a design, the second driving member drives the rotary base 31 to rotate so as to drive the robotic arm body 1 to rotate through 360° in a horizontal plane, which facilitates the driving operation and reduces space occupation. The second driving member includes a driving motor or a combination of a driving motor and a speed reducer, and may be designed according to actual requirements.

In some embodiments, with continued reference to FIG. 1, the robotic arm body 1 includes a first arm 11, a second arm 12 and a third arm 13 that are sequentially connected. The first arm 11 is disposed on the rotary base 31, and the robotic gripper 2 is disposed on the third arm 13. The first arm 11 can swing in the vertical direction relative to the rotary base 31, the second arm 12 can swing in the vertical direction relative to the first arm 11, and the third arm 13 can swing in the vertical direction relative to the second arm 12.

With such a design, the robotic arm body 1 enables an increased range of swing and flexibility of the robotic gripper 2 in the vertical direction by means of the cooperation of the first arm 11, the second arm 12 and the third arm 13, such that the robotic arm body 1 can drive the robotic gripper 2 to move into narrow gaps or low-clearance areas, thereby expanding an operating range of the cleaning robot.

It should be understood that the number of segments of the robotic arm body 1 is not limited to the configuration described above and may be designed according to actual requirements.

In some embodiments, a third driving member for driving the first arm 11 to swing in the vertical direction relative to the rotary base 31 is provided inside the first arm 11. Specifically, the third driving member is disposed at a bottom end of the first arm 11, and an output shaft of the third driving member extends from a side of the first arm 11 and is connected to a support on the rotary base 31. Since base 21 is maintained at a fixed position in the vertical direction, the rotation of the output shaft of the third driving member causes the third driving member to drive the first arm 11 to swing in the vertical direction. The third driving member includes a driving motor or a combination of a driving motor and a speed reducer, which may be selected according to actual requirements.

In some embodiments, a fourth driving member for driving the second arm 12 to swing in the vertical direction relative to the first arm 11 is provided inside the first arm 11. Specifically, the fourth driving member is disposed at a top end of the first arm 11, and an output shaft of the fourth driving member extends from a side of the first arm 11 and is connected to the second arm 12, such that the fourth driving member drives the second arm 12 to rotate through 360° in a vertical plane. The fourth driving member includes a driving motor or a combination of a driving motor and a speed reducer, which may be selected according to actual requirements.

In some embodiments, a fifth driving member for driving the third arm 13 to swing in the vertical direction relative to the second arm 12 is provided inside the second arm 12. Specifically, the fifth driving member is disposed at a top end of the second arm 12, and an output shaft of the fifth driving member extends from a side of the second arm 12 and is connected to the third arm 13, such that the fifth driving member drives the third arm 13 to swing in the vertical direction. The fifth driving member includes a driving motor or a combination of a driving motor and a speed reducer, which may be selected according to actual requirements.

With such a design, the robotic arm body 1 has four independent motion axes, enabling four-degree-of-freedom movement. The first arm 11 has two degrees of freedom, allowing the robotic arm body 1 to rotate in the horizontal and vertical planes, so as to achieve left-right swinging in the horizontal plane, and to provide upward and downward movement to enable the robotic arm body 1 to swing upward and downward in the vertical plane. The second arm 12 allows the robotic arm body 1 to rotate in the vertical direction, so as to control a spatial position of the robotic gripper 2. The third arm 13 is configured to rotate the robotic gripper 2 in the vertical direction, so as to accommodate different tool angles and orientations.

In some embodiments, as shown in FIG. 1 and FIG. 2, the second arm 12 is located on a side of the first arm 11, and the third arm 13 is located at an end of the second arm 12.

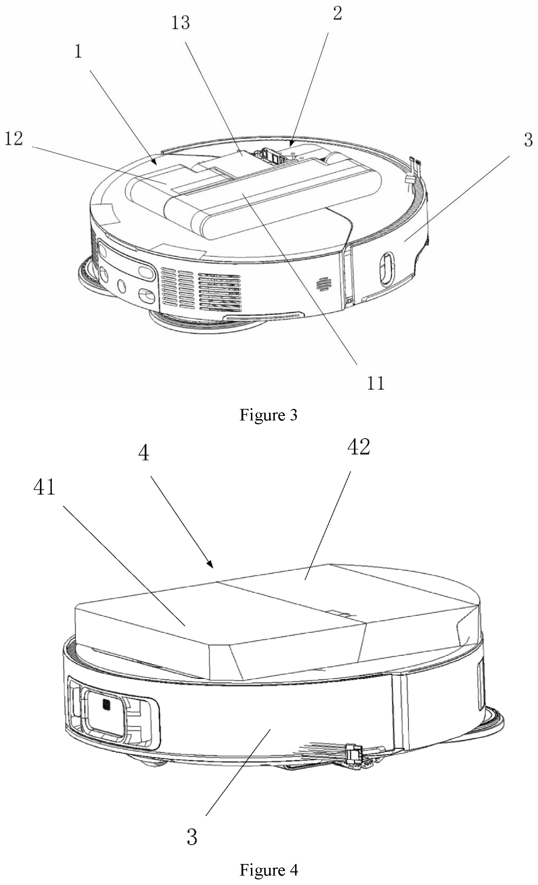

With such a design, as shown in FIG. 3, the robotic arm body 1 in a retracted state can be fitted against a top of the body 3 of the cleaning robot, reducing the space occupation in the vertical direction and resulting in a more compact structure of the body 3 of the cleaning robot.

It should be understood that in some other embodiments, the second arm 12 is located at an end of the first arm 11, and the third arm 13 is located at an end of the second arm 12, such that, when the robotic arm body 1 is in the retracted state, the first arm 11, the second arm 12 and the third arm 13 are stacked on the top of the body 3 of the cleaning robot, without limitation.

As shown in FIG 1, the present application further provides a cleaning robot, including a body 3 and a robotic arm described above, the robotic arm being disposed on the body 3. The robotic arm here includes all the technical features of the robotic arm described above. The cleaning robot may be any form of sweeping robot. In addition to being used in combination with a sweeping robot, the robotic arm described above may be used in combination with other types of mechanical device.

With such a design, a cleaning range of the cleaning robot is significantly expanded, such that application scenarios of the cleaning robot extend from open and flat floors to narrow gaps and low-clearance areas. In addition, the cleaning robot is capable of performing garbage disposal operations and cleaning operations in cooperation with the cleaning element, thereby enriching cleaning functions of the cleaning robot and improving the cleaning effect.

In some embodiments, as shown in FIG. 4, a cover assembly 4 is provided on the body 3. The cover assembly 4 is configured to be opened when the robotic arm is in an operating state and to cover a periphery of the robotic arm when the robotic arm is in a non-operating state.

With such a design, the cover assembly 4 can protect the robotic arm when the robotic arm is in the non-operating state, thus prolonging the service life of the robotic arm.

In some embodiments, as shown in FIGS. 4 to 7, the cover assembly 4 includes a first cover 41 and a second cover 42 disposed opposite each other. The term "disposed opposite each other" here means that the first cover 41 and the second cover 42 are disposed opposite each other in the horizontal direction. A first flipping member 32 and a second flipping member 33 is provided on the body 3, the first flipping member 32 can drive the first cover 41 to flip, the second flipping member 33can drive the second cover 42 to flip, and the flipped second cover 42 can be stacked on the first cover 41.

With such a design, the opened second cover 42 is stacked on the first cover 41, reducing the space occupation of the unfolded cover assembly 4. In addition, when stored, the first cover 41 and the second cover 42 that abut against each other enables the cover assembly 4 to be seamlessly connected without gaps or overlap, thereby improving the sealing performance and structural stability of the cover assembly 4, and providing a more integrated overall appearance.

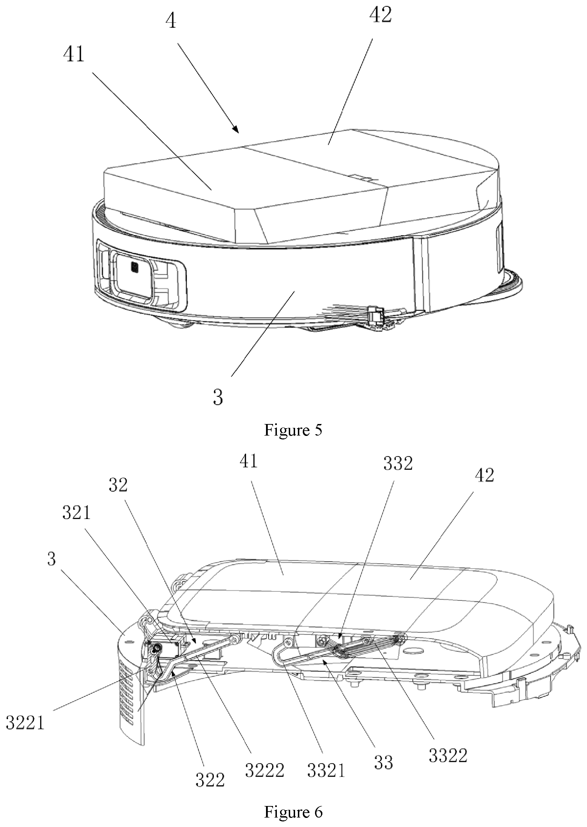

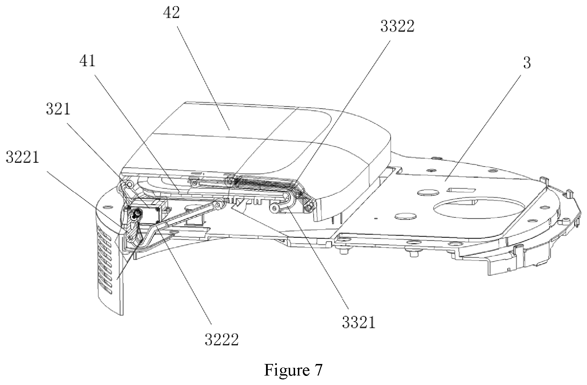

In some embodiments, as shown in FIGS. 6 and 7, an end of the first cover 41 that is away from the second cover 42 is articulated to the body 3. The first flipping member 32 includes a first flipping driving member 321 and a first flipping linkage 322. The first flipping driving member 321 is disposed on the body 3, and the first cover 41 is connected to the first flipping driving member 321 via the first flipping linkage 322. The first flipping linkage 322 includes a first driving rod 3221 and a first supporting rod 3222. One end of the first driving rod 3221 is connected to an output end of the first flipping driving member 321 such that the first driving rod 3221 is driven to rotate by the first flipping driving member 321; the other end of the first driving rod 3221 is articulated to an end of the first supporting rod 3222, and an end of the first supporting rod 3222 away from the first driving rod 3221 is articulated to the first cover 41. Specifically, the end of the first supporting rod 3222 is articulated to a portion of the first cover 41 close to the second cover 42. The first flipping driving member 321 includes a driving motor or a combination of a driving motor and a speed reducer, which may be selected according to actual requirements.

In an initial state, the first driving rod 3221 extends downwardly or is inclined downwardly, and the end of the first supporting rod 3222 is articulated to the end of the first driving rod 3221. When the cover is opened, the first flipping driving member 321 drives the first driving rod 3221 to rotate (counter-clockwise), and the first driving rod 3221 then drives the first supporting rod 3222 to move upward, such that the first cover 41 is lifted by the end of the first supporting rod 3222 away from the first driving rod 3221, thereby providing clearance for the robotic arm body 1 to move out, and then return to its original position for stacking of the second cover 42.

With such a driving method, the driving operation is facilitated, and the first cover 41 can be lifted by a relatively small rotational movement of an output shaft of the first flipping driving member 321, thereby increasing efficiency.

In some embodiments, the end of the first supporting rod 3222 that is connected to the first driving rod 3221 has a protrusion, such that the end of the first supporting rod 3222 that is connected to the first driving rod 3221 is of a hook structure.

With such a configuration, the first supporting rod 3222 can provide sufficient supporting force.

In some embodiments, the second flipping member 33 includes a second flipping driving member and a second flipping linkage 332. The second flipping driving member is disposed on the body 3, and the second flipping linkage 332 includes a second driving rod 3321 and a second supporting rod 3322. An end of the second driving rod 3321 is bent, and the bent end of the second driving rod 3321 is connected to an output end of the second flipping driving member, so as to increase a rotation angle of the second driving rod 3321. The other end of the second driving rod 3321 is articulated to the second cover 42, such that the second cover 42 can be driven by the second flipping driving member to flip about an axis of an output shaft of the second flipping driving member. One end of the second supporting rod 3322 is articulated to the body 3, and the other end of the second supporting rod 3322 is articulated to the second cover 42. The second flipping driving member includes a driving motor or a combination of a driving motor and a speed reducer, which may be selected according to actual requirements.

With such a design, the second driving rod 3321 can cooperate with the second supporting rod 3322 to enable the second cover 42 to extend horizontally at all times while being driven to flip, such that the second cover 42 can cover the top of the first cover 41.

It should be noted that, in the description, relationship terms such as "first" and "second" are merely used to distinguish an entity or operation from another entity or operation, and do not necessarily require or imply that any such actual relationship or order exists between those entities or operations. Moreover, the terms "include", "comprise", or any other variants thereof are intended to cover non-exclusive inclusion, such that a process, method, article, or device that includes a list of elements includes not only those elements, but also other elements not specifically listed, or elements inherent to such a process, method, article, or device. Without further limitation, an element defined by the phrase "including a..." does not exclude the presence of additional identical elements in the process, method, article, or device that includes the element.

The above descriptions are merely specific embodiments of the present application, and are intended to enable those skilled in the art to understand or implement the present application. Various modifications to these embodiments will be readily apparent to those skilled in the art, and the general principles defined herein may be applied to other embodiments without departing from the spirit or scope of the present application. Therefore, the present application is not intended to be limited to the embodiments described herein, but is to be accorded the widest scope consistent with the principles and novel features of the present application.

## Claims

1. A robotic arm for use in a cleaning robot, **characterized by** comprising a robotic arm body (1) and a robotic gripper (2) disposed on the robotic arm body (1), wherein the robotic arm body (1) is capable of at least driving the robotic gripper (2) to rotate in a horizontal direction and to swing in a vertical direction, the robotic gripper (2) comprises a base (21), and a driving mechanism (22) and two jaws (23) that are disposed on the base (21), the driving mechanism (22) is capable of driving the two jaws (23) to move toward or away from each other, and the jaws (23) are configured to grip an object to be cleaned or to assemble a cleaning element.

2. The robotic arm according to claim 1, **characterized in that** the driving mechanism (22) comprises a first driving member (221) and two transmission members (222), wherein the first driving member (221) is capable of driving the two jaws (23) to move via the two transmission members (222), respectively.

3. The robotic arm according to claim 2, **characterized in that** a worm (2211) is provided at an output end of the first driving member (221), each of the transmission members (222) comprises a transmission gear set (2221) and a linkage structure (2222), a leading gear of the transmission gear set (2221) is capable of meshing with the worm (2211), and a trailing gear of the transmission gear set (2221) is connected to a jaw (23) via the linkage structure (2222).

4. The robotic arm according to claim 3, **characterized in that** the linkage structure (2222) comprises a first link (22221) and a second link (22222);
one end of the first link (22221) is connected to the trailing gear of the transmission gear set (2221), and the other end of the first link (22221) is articulated to the jaw (23); and
one end of the second link (22222) is articulated to the base (21), and the second end of the second link (22222) is articulated to the jaw (23).

5. The robotic arm according to claim 1, **characterized by** comprising a second driving member and a rotary base (31) that are configured to be disposed on a body (3) of the cleaning robot, wherein the second driving member is capable of driving the rotary base (31) to rotate, and the robotic arm body (1) is disposed on the rotary base (31).

6. The robotic arm according to claim 5, **characterized in that** the robotic arm body (1) comprises a first arm (11), a second arm (12) and a third arm (13) that are sequentially connected, the first arm (11) being disposed on the rotary base (31) and the robotic gripper (2) being disposed on the third arm (13);
wherein the first arm (11) is capable of swinging in the vertical direction relative to the rotary base (31), the second arm (12) is capable of swinging in the vertical direction relative to the first arm (11), and the third arm (13) is capable of swinging in the vertical direction relative to the second arm (12).

7. The robotic arm according to claim 6, **characterized in that** a third driving member for driving the first arm (11) to swing in the vertical direction relative to the rotary base (31) is provided inside the first arm (11);
and/or a fourth driving member for driving the second arm (12) to swing in the vertical direction relative to the first arm (11) is provided inside the first arm (11);
and/or a fifth driving member for driving the third arm (13) to swing in the vertical direction relative to the second arm (12) is provided inside the second arm (12).

8. The robotic arm according to claim 6, **characterized in that** the second arm (12) is located on a side of the first arm (11) and the third arm (13) is located at an end of the second arm (12).

9. A cleaning robot, **characterized by** comprising a body (3) and a robotic arm according to any one of claims 1 to 8, the robotic arm being disposed on the body (3).

10. The cleaning robot according to claim 9, **characterized in that** a cover assembly (4) is provided on the body (3), wherein the cover assembly (4) is configured to be capable of being opened when the robotic arm is in an operating state and capable of covering a periphery of the robotic arm when the robotic arm is in a non-operating state.

11. The cleaning robot according to claim 10, **characterized in that** the cover assembly (4) comprises a first cover (41) and a second cover (42) disposed opposite each other, a first flipping member (32) and a second flipping member (33) are provided on the body (3), the first flipping member (32) is capable of driving the first cover (41) to flip, the second flipping member (33) is capable of driving the second cover (42) to flip, and the flipped second cover (42) is capable of being stacked on the first cover (41).

12. The cleaning robot according to claim 11, **characterized in that** the first flipping member (32) comprises a first flipping driving member (321) and a first flipping linkage (322) comprising a first driving rod (3221) and a first supporting rod (3222), wherein one end of the first driving rod (3221) is connected to an output end of the first flipping driving member (321), the other end of the first driving rod (3221) is articulated to an end of the first supporting rod (3222), and an end of the first supporting rod (3222) away from the first driving rod (3221) is articulated to the first cover (41).

13. The cleaning robot according to claim 11, **characterized in that** the second flipping member (33) comprises a second flipping driving member and a second flipping linkage (332) comprising a second driving rod (3321) and a second supporting rod (3322), wherein an end of the second driving rod (3321) is bent, the bent end of the second driving rod (3321) is connected to an output end of the second flipping driving member, the other end of the second driving rod (3321) is articulated to the second cover (42), one end of the second supporting rod (3322) is articulated to the body (3), and the other end of the second supporting rod (3322) is articulated to the second cover (42).
